# FASCICULE DE BREVET EUROPEEN

(11) **EP 0 508 887 B1**
(45) Date de publication et mention de la délivrance du brevet: **11.10.1995**
(21) Numéro de dépôt: 92400970.7
(22) Date de dépôt: 07.04.1992
(51) Int. Cl.: G01N 1/08

(54) **Prélèvement automatique d'échantillons dans un produit en vrac**
Selbsttätige Probenentnahme von Schüttgütern
Automatic sampling from bulk products

(30) Priorité: 08.04.1991 FR 9104234
(43) Date de publication de la demande: 14.10.1992
(73) Titulaire: SARP INDUSTRIES, F-78520 Limay (FR)
(72) Inventeur: Biros, Jean-Louis, F-75116 Paris (FR)
(74) Mandataire: Ballot, Paul Denis Jacques

(56) Documents cités:
- DE-A- 3 613 038
- FR-A- 2 480 723
- GB-A- 2 123 951
- US-A- 3 822 600
- US-A- 4 616 515

## Description

La présente invention a trait au domaine de la saisie d'échantillons, aux fins de contrôle et/ou analyse, au sein de produits en vrac, notamment des produits sous forme pulvérulente ou pâteuse. Elle concerne tout spécialement un procédé d'ensemble, entièrement automatisé, depuis la prise d'échantillon dans un conteneur comme par exemple une benne de camion jusqu'à l'analyse du produit en cause, transporté en récipient clos, dans un laboratoire situé sur le lieu opérationnel.

De nombreux moyens et dispositifs de prélèvement d'un échantillon unitaire ou portion de produit, dans un conteneur où une grande quantité de produit est disposée en vrac, ont été préconisés.

Le document FR-A1-2 480 723 décrit une installation pour la prise d'échantillons dans une masse de produit, tel que, par exemple, betteraves sucrières ou autres produits analogues, placés en vrac dans une benne, ladite installation comportant un portique et une sonde comportant une gaine associée à des moyens propres à les commander en déplacements sensiblement verticaux.

Par ailleurs, le document US-A-3 822 600 décrit un procédé du prélèvement et transport d'échantillons de produits en vrac qui comporte des opérations de mise en stationnement d'un camion sur une aire que surplombe un portique, de prélèvement d'un échantillon par un dispositif de forage et de nettoyage dudit dispositif de forage.

Il se pose toutefois des problèmes particuliers et difficiles à résoudre lorsqu'il s'agit de prélever, pour contrôle et analyse, des produits nocifs et dangereux tels que notamment des déchets et résidus divers, notamment ceux issus des industries chimiques et parachimiques qui se présentent souvent sous forme solide, pulvérulente et/ou sous l'aspect de produits pâteux.

Des déchets de ce type, avant d'être acceptés dans une décharge ou dans une usine de traitement, doivent être soigneusement analysés, ce qui suppose un échantillonnage représentatif. Pour cela, il est indispensable de pouvoir prélever un échantillon dans n'importe quelle zone, en trois dimensions, d'un chargement car on connaît de nombreux cas où, par exemple, la composition du déchet en surface est notablement différente de celle du produit placé, volontairement ou non, au fond du chargement.

Les méthodes connues de prélèvement pour les déchets, telles que pelles, carottes et analogues ne peuvent convenir du fait que le déchet est souvent nocif et peut s'enflammer. En outre, il convient d'assurer l'hygiène du personnel afin d'éviter la mise en contact avec des produits agressifs et des vapeurs nocives. Par ailleurs, la représentativité de l'échantillon doit être la plus parfaite possible. Enfin, il convient d'opérer avec rapidité pour ne pas, notamment, faire attendre le transporteur chargé de véhiculer les déchets à la décharge.

Le but visé par l'invention a été d'imaginer puis mettre au point et expérimenter un système de prélèvements pour analyse, notamment dans le cas de déchets, présentant les caractéristiques suivantes, conformes à un strict cahier des charges : prélèvement dans n'importe quel point d'un chargement en vrac; transmission immédiate de l'échantillon aux appareillages d'analyse et contrôle; protection contre le vandalisme et les erreurs et dangers des manipulations manuelles; extraction et transport de l'échantillon sans introduire d'éléments gênants pour les essais ultérieurs; utilisation de faibles quantités d'eau pour le nettoyage des équipements entre deux prélèvements successifs.

Afin de résoudre ce difficile problème et d'apporter une solution apte à satisfaire notamment aux exigences rappelées ci-dessus, l'invention propose un procédé de prélèvement, transport et analyse d'échantillons de déchets et résidus, en particulier des déchets industriels nocifs et dangereux, comportant des opérations de mise en stationnement d'un camion sur une aire prédéterminée de chaussée que surplombe un portique accessible par des marches d'escalier; de prélèvement d'un échantillon par un dispositif à vis de forage installé sur ledit portique; de transfert dudit échantillon dans un récipient; de nettoyage dudit dispositif à vis de forage; caractérisé en ce qu'il comporte en outre des opérations de fermeture du récipient et d'analyse de l'échantillon dans un laboratoire situé sur le lieu opérationnel; et en ce que le procédé est automatique, la commande et le contrôle des opérations précédentes étant effectués à partir du laboratoire.

Selon la caractéristique essentielle de l'invention, les moyens de commande et contrôle en laboratoire, comprenant un poste à écrans de contrôle, muni de mécanismes asservis par des systèmes électro-pneumatiques gérés par automate programmable, permettent de diriger à distance sans intervention manuelle, toutes les opérations successives de : mise en parfaite position du camion sur ladite aire prédéterminée par moyens optiques et/ou capteurs; prélèvement de l'échantillon par le dispositif à tête de forage; fonctionnement de ce dispositif; transfert de l'échantillon au laboratoire; nettoyage de la tête de forage puis remise en position d'attente du dispositif; et enfin évacuation du camion de ladite aire.

Le dispositif à vis de forage comporte une tête de forage commandée en translation verticale, lors du prélèvement d'échantillon dans la benne du camion, par des moyens pneumatiques et, en translation horizontale, par des moyens motorisés.

La translation horizontale du dispositif de prélèvement permet d'entreprendre, sur le portique, les phases de : transfert de l'échantillon prélevé dans un récipient dont la fermeture est assurée avant son transport, pneumatique ou autre, au laboratoire; nettoyage du dispositif, par exemple par jets d'eau et jets d'air; séchage puis mise en attente du dispositif pour un nouveau cycle de prélèvement.

L'invention sera mieux comprise par une description détaillée d'un mode de réalisation, non limitatif, illustré par les planches de dessins annexés qui représentent :

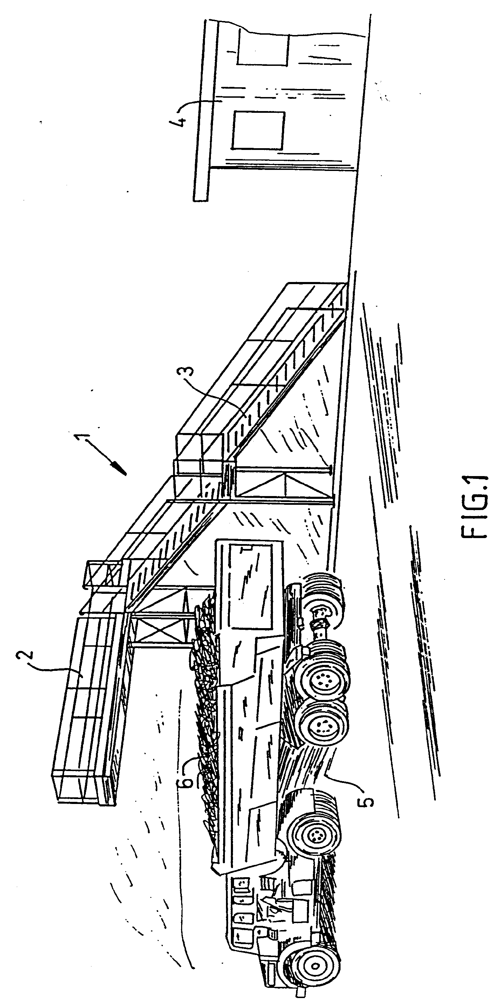

- figure 1, une vue générale d'un site d'implantation d'une installation selon l'invention;
- figures 2, 3 et 4, des vues successives du dispositif automatique de prélèvement et transfert d'échantillon dans les diverses phases opératoires;
- figure 5, une représentation schématique d'un poste de commande et contrôle de toutes les opérations, installé en laboratoire sur le site de travail.

Conformément à l'exemple d'exécution représenté sur ces dessins, une installation selon l'invention comporte essentiellement : une passerelle 1 avec portique 2 et marches d'escalier 3, disposée à proximité d'un local ou laboratoire 4 et sous laquelle stationne l'engin de transport 5 avec son chargement de déchets 6; un ensemble de prélèvement automatique d'échantillon de déchet, visible sur les figures 2 à 4, disposé sur la passerelle et commandé par des automatismes schématiquement illustrés par les écrans de commande et contrôle 7 disposés dans le laboratoire 4.

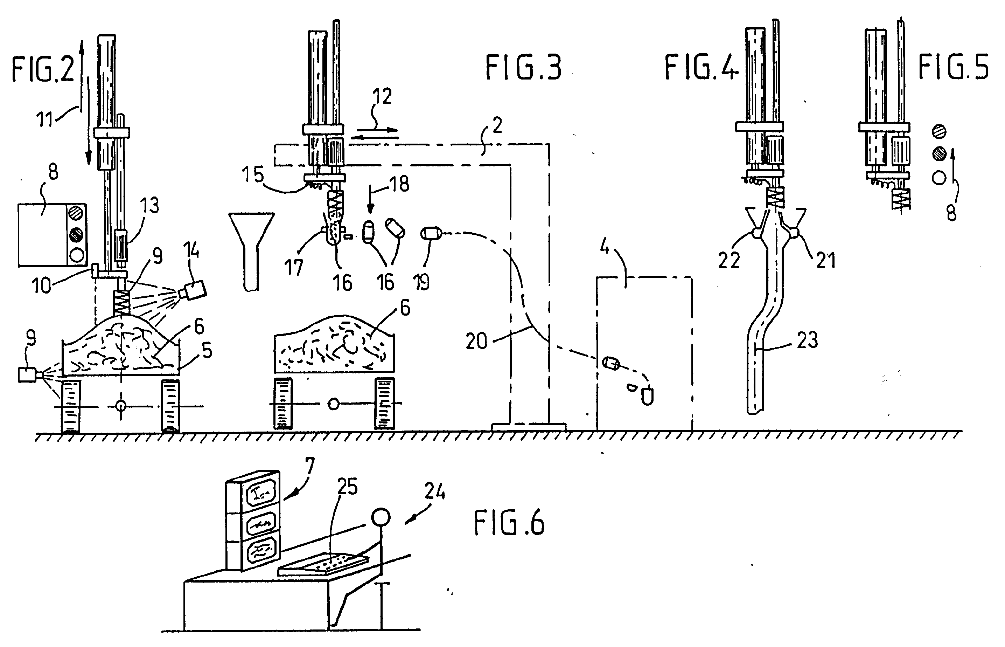

L'engin de transport 5 est ici représenté par un camion mais il peut bien entendu s'agir d'un wagon, d'une péniche ou autre conteneur dans le site correspondant. L'ensemble de prélèvement automatique a pour but de remplir les fonctions suivantes schématisées sur les figures 2 à 6 : positionnement du camion puis prélèvement de l'échantillon (fig.2); transfert de l'échantillon en récipient et transport de ce dernier au labo pour analyse (fig.3); nettoyage de la tête de prélèvement (fig.4); évacuation du camion et remise en position d'attente du dispositif de prélèvement (fig.5); toutes les opérations étant commandées à distance comme dit ci-dessus (fig.6). Ces opérations sont reprises plus en détail ci-après.

Pour sa mise en positionnement, le camion 5 entre dans l'aire de prélèvement suivant un axe indiqué par tracé sur la chaussée ou par balise ou panneau. Un système de clignotants 8 l'oblige à ralentir. Le camion est suivi par des caméras 9 et guidé par l'opérateur situé dans le laboratoire 4 qui, par l'intermédiaire du panneau d'informations 8 et des images captées sur les moniteurs 7 donne les ordres de manoeuvre, comme par exemple : avance de un mètre, recul de 0,50m etc. Selon une variante, on peut utiliser des capteurs fournissant des informations de position avec transcription sur le panneau d'information 8. Dés que le camion est en bonne position, on commande la manoeuvre du dispositif de prélèvement.

Le dispositif de prélèvement comprend'une tête ou vis de forage 9 montée sur un bâti avec détecteur de distance 10, apte à se déplacer verticalement (flèche 11) et horizontalement (flèche 12) par moteur 13.

La tête de forage 9 est pilotée depuis le laboratoire 4 pour effectuer le prélèvement au lieu choisi dans le chargement de déchets 6. Un système optique 14 est avantageusement mis en place pour déclencher la rotation et l'avance de la vis de forage. Le relevage de la tête de forage est supprimé automatiquement lorsque le prélèvement est jugé satisfaisant.

Selon la deuxième phase opératoire, illustrée sur la fig.3, l'échantillon prélevé est extrait de la vis par rotation inverse et, éventuellement, par injection gazeuse en 15. L'échantillon est transféré dans un récipient ou capacité 16 dont le niveau peut être vérifié par des capteurs 17. La capacité 16 est conçue pour être bouchée automatiquement en 18 et transféré pneumatiquement 19,20 jusqu'au laboratoire d'analyse 4. Le retour d'une capacité propre, pour un autre prélèvement, est effectué depuis le laboratoire.

Après chaque prélèvement, la tête de forage est disposée automatiquement sur un poste de nettoyage illustré sur la figure 4. A ce stade, on envoie des jets d'eau 21 et des jets d'air 22 pour assurer successivement les fonctions de lavage, égouttage puis séchage. La poussée de liquide est réduite au minimum et les effluents sont dirigés par la canalisation souple 23 vers un bac de rétention et traitement des effluents.

Une fois le prélèvement et le nettoyage effectués, le dispositif de forage revient en position départ, ou attente camion, illustré sur la figure 5. L'ordre d'évacuation du camion 5, transmis sur le panneau d'informations 8, peut être donné soit au moment où le prélèvement est jugé satisfaisant, après les données du capteur de niveau 17 (fig.3), soit après traitement de l'échantillon en capacité 16 dans le laboratoire.

Comme déjà précisé, toutes les opérations sont effectuées en automatique, avec assistance et surveillance depuis la salle 24 (fig.6) du laboratoire où sont disposés les écrans de contrôle 7. L'opérateur dirige les commandes électropneumatiques, gérées par automate programmé, ainsi que les systèmes de sécurité directement sur son poste de pilotage 25. Les analyses de l'échantillon de déchets prélevés sont effectuées immédiatement dans le laboratoire 4 par les moyens appropriés.

Bien entendu, l'invention n'est pas limitée au mode d'exécution susdécrit mais s'étend à tous les moyens et réalisations équivalents dans le cadre et la portée des revendications qui suivent.

## Revendications

1. Procédé de prélèvement, transport et analyse d'échantillons de déchets et résidus, en particulier des déchets industriels nocifs et dangereux, comportant des opérations de mise en stationnement d'un camion (5) sur une aire prédéterminée de chaussée que surplombe un portique (2) accessible par des marches d'escalier (3) ; de prélèvement d'un échantillon par un dispositif à vis de forage installé sur ledit portique ; de transfert dudit échantillon dans un récipient (16, 18) ; de nettoyage dudit dispositif à vis de forage ; caractérisé en ce qu'il comporte en outre des opérations de fermeture du récipient et d'analyse de l'échantillon dans un laboratoire (4) situé sur le lieu opérationnel ; et en ce que le procédé est automatique, la commande et le contrôle (7,25) des opérations précédentes étant effectués à partir du laboratoire.

2. Procédé selon la revendication 1, caractérisé en ce que le dispositif à vis de forage (9) retrouve une position d'attente pour un nouveau cycle de prélèvement, après avoir été soumis au nettoyage.

3. Procédé selon la revendication 1, caractérisé en ce que le nettoyage est effectué par jet d'eau (21) et jet d'air (22) puis suivi d'un séchage, les effluents de nettoyage (23) étant dirigés vers une capacité de rétention.

4. Procédé selon l'une quelconque des revendications 1 à 3, caractérisé en ce que le prélèvement de l'échantillon par le dispositif à vis de forage est commandé en translation verticale (11) par des moyens pneumatiques et en translation horizontale (12) par des moyens motorisés (13).

5. Procédé selon l'une quelconque des revendications 1 à 4, caractérisé en ce que la commande et le contrôle des opérations sont effectués à partir du laboratoire (4) par un poste de pilotage (25), avec écrans de contrôle (7) asservis par des systèmes électropneumatiques gérés par automate programmable, lesdites opérations étant ainsi programmées et commandées à distance sans intervention manuelle.

## Patentansprüche

1. Verfahren zur Entnahme, zum Transport und zur Analyse von Abfall- und Rückstandsproben, insbesondere von schädlichen und gefährlichen Industrieabfällen, umfassend die Schritte des Parkens eines Lastwagens (5) auf einer bestimmten Strassenfläche, die von einem Portal überspannt wird, der über Treppenstufen (3) zugänglich ist, des Entnehmens einer Probe mittels einer am Portal angeordneten Bohrschraubvorrichtung, der Übergabe der Probe in einen Behälter (16, 18) und der Reinigung der Bohrschraubvorrichtung, dadurch gekennzeichnet, daß es außerdem die Schritte des Verschließens des Behälters und der Analyse der Probe in einem an der Arbeitsstelle eingerichteten Labor (14) umfaßt und daß das Verfahren automatisch abläuft, indem die Steuerung und die Kontrolle (7, 25) der vorhergehenden Schritte vom Labor aus in Gang gesetzt werden.

2. Verfahren nach Anspruch 1, dadurch gekennzeichnet, daß die Bohrschraubvorrichtung (9) nach ihrer Reinigung eine Wartestellung einnimmt für eine erneute Probenentnahme.

3. Verfahren nach Anspruch 3, dadurch gekennzeichnet, daß die Reinigung mittels eines Wasserstrahls (21) und eines Luftstrahls (22) gefolgt von einem Trockenvorgang erfolgt, wobei die Reinigungsreste (23) in einen Aufnahmeraum geleitet werden.

4. Verfahren nach einem der Ansprüche 1 bis 3, dadurch gekennzeichnet, daß die Entnahme der Probe durch die Bohrschraubvorrichtung durch senkrechte Bewegung (11) durch eine pneumatische Anordnung und durch eine Querverschiebung (12) durch eine motorisierte Anordnung (13) erfolgt.

5. Verfahren nach einem der Ansprüche 1 bis 4, dadurch gekennzeichnet, daß die Steuerung und die Kontrolle der einzelnen Schritte vom Labor (4) aus in Gang gesetzt werden mittels eines Steuerpultes (25), der Kontrollbildschirme (7) aufweist zur Steuerung von elektropneumatischen Systemen, die durch einen programmierbaren Automaten angesteuert werden, so daß die dergestalt programmierten Verfahrensschritte mittels Fernbedienung ohne manuelle Intervention durchgeführt werden.

## Claims

1. Process for the sampling, transport and analysis of waste and residual materials, in particular harmful and dangerous industrial waste materials, comprising the steps of parking a truck (5) on a predetermined area of roadway over which projects a gantry (2) accessible by means of stairs (3); sampling the material by means of a drilling screw device installed on said gantry; transferring the sample into a container (16, 18); cleaning said drilling screw device; characterised in that it also comprises the steps of closing the container and analysing the sample in a laboratory (4) situated at the operational site; and in that the process is automatic, the effecting and control (7, 25) of the operations being carried out from the laboratory.

2. Process according to claim 1, characterised in that after being cleaned the drilling screw device (9) takes up a waiting position for a new sampling cycle.

3. Process according to claim 1, characterised in that the cleaning is carried out by a jet of water (21) and a jet of air (22) followed by drying, the cleaning effluents (23) being directed towards a retention facility.

4. Process according to any one of claims 1 to 3, characterised in that in the sampling of the material the drilling screw device is driven vertically (11) by pneumatic means and horizontally (12) by motor-driven means (13).

5. Process according to any one of claims 1 to 4, characterised in that the effecting and control of the operations are carried out from the laboratory (4) by means of a steering station (25), with control screens (7) controlled by electropneumatic systems managed by a programmable robot, said operations being programmed and operated by remote control without manual intervention.
